# EUROPÄISCHE PATENTSCHRIFT

(11) **EP 2 446 640 B1**
(45) Veröffentlichungstag und Bekanntmachung des Hinweises auf die Patenterteilung: **10.07.2019**
(21) Anmeldenummer: 10725060.7
(22) Anmeldetag: 05.05.2010
(51) Int. Cl.: G06K 9/32, H04N 17/00

(54) **VORRICHTUNG UND VERFAHREN ZUR BESTIMMUNG EINES ABTASTRATENUNTERSCHIEDES**
APPARATUS AND METHOD FOR DETERMINING SAMPLING RATE DIFFERENCE
APPAREIL ET PROCÉDÉ POUR DÉTERMINER LA DIFFERENCE DES FRÉQUENCES D'ECHANTILLONNAGE

(30) Priorität: 24.06.2009 DE 102009030318
(43) Veröffentlichungstag der Anmeldung: 02.05.2012
(73) Patentinhaber: Opticom, Dipl.-Ing. Michael Keyhl GmbH, 91052 Erlangen (DE)
(72) Erfinder: SCHMIDMER, Christian, 90491 Nürnberg (DE); BITTO, Roland, 90453 Nürnberg (DE); KEYHL, Michael, 90562 Heroldsberg (DE)
(74) Vertreter: Schenk, Markus
(86) Internationale Anmeldenummer: PCT/EP2010/056095
(87) Internationale Veröffentlichungsnummer: WO 2010/149418

(56) Entgegenhaltungen:
- US-A1- 2006 044 391
- RIX A W ET AL: "PERCEPTUAL EVALUATION OF SPEECH QUALITY (PESQ) THE NEW ITU STANDARD FOR END-TO-END SPEECH QUALITY ASSESSMENT PART 1-TIME-DELAY COMPENSATION" JOURNAL OF THE AUDIO ENGINEERING SOCIETY, AUDIO ENGINEERING SOCIETY, NEW YORK, NY, US, Bd. 50, Nr. 10, 1. Oktober 2002 (2002-10-01), Seiten 755-764, XP001245917 ISSN: 1549-4950
- CHRISTIAN SCHMIDMER OPTICOM GERMANY: "P.862 / PESQ Implementations must Indicate Invalid Results if Time Alignment fails; D 112" ITU-T DRAFT STUDY PERIOD 2001-2004, INTERNATIONAL TELECOMMUNICATION UNION, GENEVA ; CH, Bd. STUDY GROUP 12, 27. Januar 2003 (2003-01-27), Seiten 1-2, XP017416067

## Beschreibung

Die vorliegende Erfindung bezieht sich auf eine Vorrichtung und ein Verfahren zur Bestimmung eines Abtastratenunterschieds zwischen zwei Informationssignalen, wie z.B. zwischen einem ungestörten Informationssignal und einem gestörten Informationssignal. Die Vorrichtung und das Verfahren zur Bestimmung eines Abtastratenunterschieds kann beispielsweise zur Verbesserung von sog. objektiven Messungen zur Qualitätsbeurteilung von Signalen eingesetzt werden.

In Anwendungen, wie z.B. Sprach-, Audio- und Videoqualitätsmessungen besteht häufig die Notwendigkeit, ein ungestörtes Referenzsignal und ein gestörtes Testsignal abschnittsweise exakt zeitlich auszurichten. Verfahren, die dieses zeitliche Anpassen (Temporal Alignment) mit hoher Präzision erreichen, sind möglich. Zur messtechnischen Bewertung der Qualität von codierten Audio- oder Videosignalen werden heute standardisierte perzeptionsbasierte Messverfahren (Perceptional Measurement) eingesetzt. Ein solches bekanntes standardisiertes Verfahren ist beispielsweise das sog. PESQ-Verfahren (PESQ = Perceptional Evaluation of Speach Quality, PESQ(ITU-T Rec. P862)) zur gehörrichtigen Bewertung der Sprachqualität. Ein häufig anzutreffendes Problem ist jedoch, dass die Abtastraten/Frameraten der verwendeten Signale nicht exakt übereinstimmen, da sie durch das verwendete Übertragungsverfahren teils absichtlich, teils durch Toleranzen mitunter erheblich verändert wurden. In diesem Fall ist nur ein kurzer Abschnitt der zeitlich ausgerichteten Signale wirklich übereinstimmend.

Mit zunehmender Länge der Abschnitte werden die Unterschiede zwischen den Signalen bzgl. der Abtastraten/Frameraten immer größer. Bekannte Qualitätsmessverfahren bewerten diese Unterschiede als starke Störung, obwohl ein Mensch die Unterschiede kaum wahrnehmen würde. Um die Störungen korrekt zu bewerten und damit eine objektive und gute Qualitätsmessung durchführen zu können, kann es notwendig sein, vor dem zeitlichen Ausrichten der Signale die Abtastraten zu korrigieren. Die Schwierigkeit hierbei ist jedoch das Verhältnis der Abtastraten der beiden Signale zu bestimmen.

Im bekannten Verfahren wird dies durch das Erkennen von Verschiebungen spektraler Komponenten der Signale erzielt. Solch ein Verfahren ist beispielsweise in der Patentschrift EP 19 189 09 A1 offenbart. Dieses Verfahren erfordert jedoch sehr große Fensterlängen der zu untersuchenden Signale, die beispielsweise im Sekundenbereich sein können, um eine ausreichende Genauigkeit zu erreichen. Ferner ist solch ein Verfahren, das auf dem Erkennen von Verschiebungen spektraler Komponenten beruht, nur sehr eingeschränkt anwendbar, da heutige Übertragungssysteme meist zusätzliche zeitliche und spektrale Störungen in das Signal einfügen. Falls derartige Störungen während des Verfahrens in einem Analysefenster auftreten, ist das Ergebnis oft unbrauchbar. Bei typischen Messsequenzen, von beispielsweise 10s Dauer, wie sie z.B. für Sprachqualitätsmessverfahren eingesetzt werden, stehen somit nicht genügend Daten für eine zuverlässige Abschätzung der Abtastrate bzw. des Abtastratenunterschieds zur Verfügung. Zur Berechnung des Abtastratenunterschieds können konventionelle Methoden auf die Fourier Transformation zurückgreifen.

Die Aufgabe der vorliegenden Erfindung besteht nun darin, eine verbesserte Vorrichtung zur Bestimmung eines Abtastratenunterschieds und ein verbessertes Verfahren zur Bestimmung eines Abtastratenunterschieds zwischen einem ersten Informationssignal und einem zweiten Informationssignal zu schaffen.

Diese Aufgabe wird durch eine Vorrichtung zur Bestimmung eines Abtastratenunterschieds zwischen einem ersten Informationssignal und einem zweiten Informationssignal gemäß Patentanspruch 1, sowie durch ein Verfahren zur Bestimmung eines Abtastratenunterschieds zwischen einem ersten Informationssignal und einem zweiten Informationssignal gemäß Patentanspruch 13 und ein Computerprogramm gemäß Patentanspruch 14 gelöst.

Der vorliegenden Erfindung liegt die Erkenntnis zugrunde, dass eine Vorrichtung zur Bestimmung eines Abtastratenunterschiedes zwischen zwei Informationssignalen geschaffen werden kann, die es erlaubt auch für sehr kurze Signale, mit einem geringen Abtastratenunterschied, zuverlässig einen Abtastratenunterschied zu bestimmen, indem sie den Abtastratenunterschied auf der Basis von Versatzwerten zwischen den beiden Informationssignalen bestimmt.

Ein Vorteil der vorliegenden Erfindung besteht darin, dass die Vorrichtung und das Verfahren zur Bestimmung eines Abtastratenunterschieds sehr robust, beispielsweise gegenüber spektralen Störungen sind und auch noch bei sehr kurzen Signalen bzw. kurzen Analysefenstern und geringen Abweichungen der Abtast-/Frameraten zuverlässig funktioniert. Durch die Verwendung der Versatzwerte voneinander zugeordneter Segmente und einer statistischen Auswertung der Verteilung dieser Versatzwerte können beispielsweise Ausreißer in der Verteilung leicht entfernt werden. Eine spektrale Zerlegung und ein auf dieser spektralen Zerlegung der Informationssignale basierender Vergleich ist nicht unbedingt nötig. Die erfindungsgemäße Vorrichtung kann eine Mehrzahl, von im Vergleich zu einer spektralen Analyse kurzen Frames verwenden, so dass auf diese Weise eine relativ hohe Zahl von Messpunkten zur Verfügung steht.

Bevorzugte Ausführungsbeispiele der vorliegenden Erfindung werden nachfolgend bezugnehmend auf die beiliegenden Zeichnungen näher erläutert. Es zeigen:
- Fig. 1a: eine schematische Darstellung einer Vorrichtung zum Bestimmen eines Abtastratenunterschieds zwischen einem ersten Informationssignal und einem zweiten Informationssignal gemäß einem Ausführungsbeispiel der vorliegenden Erfindung;
- Fig. 1b: eine schematische Darstellung einer Vorrichtung zur Bestimmung eines Abtastratenunterschieds zwischen einem ersten Informationssignal und einem zweiten gestörten Informationssignal gemäß einem weiteren Ausführungsbeispiel der vorliegenden Erfindung;
- Fig. 2: ein Diagramm zur Bestimmung eines Abtastratenunterschieds mit Hilfe einer Histogrammanalyse gemäß einem weiteren Ausführungsbeispiel der vorliegenden Erfindung;
- Fig. 3: die schematische Darstellung zur Bestimmung eines Abtastratenunterschieds auf der Basis von Versatzwerten mit Hilfe einer Histrogrammanalyse;
- Fig. 4: eine schematische Darstellung zur Bestimmung eines Abtastratenunterschieds auf der Basis von Versatzwerten mit Hilfe einer Regressionsanalyse;
- Fig. 5a: eine schematische Darstellung einer Vorrichtung zur Bestimmung eines Abtastratenunterschieds mit einer Abtastratenänderungseinrichtung und optional einer Einrichtung zur zeitlichen Ausrichtung des ersten und zweiten Informationssignals gemäß einem weiteren Ausführungsbeispiel der vorliegenden Erfindung;
- Fig. 5b: eine schematische Darstellung einer Vorrichtung zur Bestimmung eines Abtastratenunterschieds mit einer Qualitätsbestimmungseinrichtung gemäß einem weiteren Ausführungsbeispiel der vorliegenden Erfindung; und
- Fig. 6: ein Flussdiagramm zum Verfahren zur Bestimmung eines Abtastratenunterschieds zwischen einem ersten Informationssignal und einem zweiten Informationssignal gemäß einem Ausführungsbeispiel der vorliegenden Erfindung.

Bezüglich der nachfolgenden Beschreibung sollte beachtet werden, dass bei den unterschiedlichen Ausführungsbeispielen gleiche oder gleich wirkende Funktionselemente gleiche Bezugszeichen aufweisen und somit die Beschreibung dieser Funktionselemente in den verschiedenen in den nachfolgend dargestellten Ausführungsbeispielen untereinander austauschbar sind.

Weiterhin sollte beachtet werden, dass im Nachfolgenden die Bedeutung des ersten Informationssignals IS1 und des zweiten Informationssignals IS2 gegeneinander austauschbar sind.

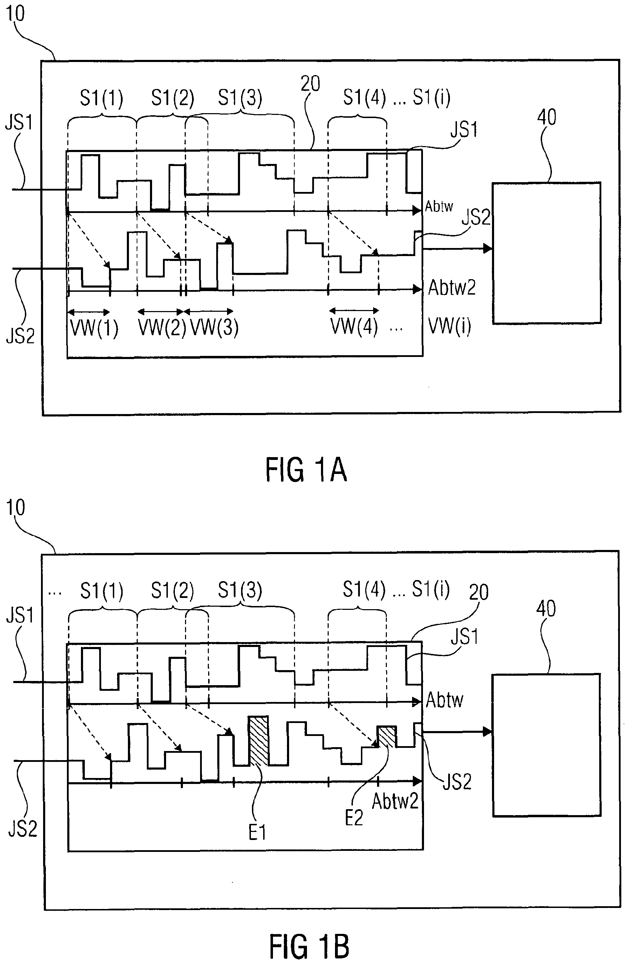

Fig. 1a zeigt eine Vorrichtung 10 zur Bestimmung eines Abtastratenunterschieds zwischen einem ersten Informationssignal IS1 und einem zweiten Informationssignal IS2 gemäß einem Ausführungsbeispiel der vorliegenden Erfindung. Die Vorrichtung 10 zur Bestimmung eines Abtastratenunterschieds weist eine Versatzbestimmungseinrichtung 20 auf, die für jedes einer Mehrzahl von Segmenten S1(i) von Segmenten des ersten Informationssignals IS1 zugeordnete Versatzwerte VW(i), die die Mehrzahl von Segmenten S1(i) zu dem zweiten Informationssignal IS2 zeitlich ausrichten, bestimmt. Ferner weist die Vorrichtung 10 eine Einrichtung 40 zur Berechnung des Abtastratenunterschieds auf Basis der Versatzwerte VW(i).

Bei dem ersten Informationssignal IS1 und dem zweiten Informationssignal IS2 kann es sich beispielsweise um Audiosignale oder auch um Videosignale und um digitale oder analoge Informationssignale handeln. Beide Informationssignale repräsentieren den gleichen Inhalt, aber aus unterschiedlichen Gründen können sich die Informationssignale unterscheiden, wie z.B. in Bezug auf die Ortsauflösung, in der Farbe der Videos, in Bezug auf die Bittiefe, sowie nicht zuletzt in Bezug auf die Abtastrate.

Die Informationssignale IS1 und IS2 sind jeweils mit einer bestimmten Abtastrate abgetastet worden oder weisen zumindest eine jeweilige Abtastrate auf. In dem Fall von Audiosignalen besitzen dieselben beispielsweise einen Audioabtastwert pro Abtastzeitpunkt. In dem Fall von Videosignalen besitzen dieselben beispielsweise einen Frame bzw. ein Bild pro Abtastzeitpunkt.

Aufgrund von Ungenauigkeiten eines Übertragungsverfahrens oder eines Übertragungsnetzwerkes, durch Umkodierung oder dergleichen können die Informationssignale Abtastratenunterschiede aufweisen. Beispielsweise dauert dann ein übereinstimmender Inhalt in dem ersten Informationssignal IS1 und dem zweiten Informationssignal IS2 aufgrund des Abtastratenunterschiedes unterschiedlich lang. Bei kurzen Abschnitten kann dieser Abtastratenunterschied nur geringfügige Abweichungen bewirken, aber bei längeren Abschnitten werden die Unterschiede zwischen den Signalen immer größer und können als starke Störungen in Erscheinung treten.

Das erste Informationssignal IS1 und das zweite Informationssignal IS2 können der Versatzbestimmungseinrichtung 20 zugeführt werden. Die Versatzbestimmungseinrichtung ist nun ausgebildet das erste Informationssignal IS1 in eine Mehrzahl von Segmenten S1(i) zu unterteilen.

Jedes Segment S1(i) kann eine Anzahl von aufeinanderfolgenden Abtastzeitpunkten aufweisen. Beispielsweise kann ein Segment des ersten Informationssignals IS1, falls es sich um ein Audiosignal handelt eine Anzahl von A1 ≤ 256 Abtastzeitpunkten aufweisen und falls es sich um ein Videosignal handelt eine Anzahl von A2 ≤ 50, beispielweise also 10, aufeinanderfolgenden Abtastzeitpunkten aufweisen.

Die Informationssignale IS1 und IS2 sind schematisch in Fig. 1a auf einer jeweils zugeordneten Abtastzeitpunkts-Achse (Abtw,Abtw2) angeordnet. Jedes Segment S1(i) kann nun spezifische Merkmale oder Informationsabschnitte des ersten Informationssignals IS1 aufweisen. Ferner kann jedes dieser Segmente eine unterschiedliche Anzahl von aufeinanderfolgender Abtastzeitpunkte oder eine unterschiedliche Anzahl von Frames aufweisen. Die Segmente S1(i) können beispielsweise eine gleiche zeitliche Länge, eine gleiche Anzahl von Abtastzeitpunkten oder eine gleiche Anzahl von Frames aufweisen, so wie es schematisch in Fig. 1a bei den Segmenten S1(1)und S1(2) gezeigt ist. Die Segmente können auch unterschiedliche zeitliche Längen, wie z.B. S1(3), oder eine unterschiedliche Anzahl von Abtastzeitpunkten oder Frames aufweisen, als andere Segmente des ersten Informationssignals IS1.

Beispielsweise kann ein Segment eines Audiosignals 1.024 Abtastwerte aufweisen, wobei diese 1.024 Abtastwerte zu 256 gemittelten Energiedichtewerte zusammengefasst werden können, mit deren Hilfe dann eine Kreuzkorrelation zur zeitlichen Ausrichtung des ersten Audiosignals IS1 und des zweiten Audiosignals IS2 durchgeführt werden kann. Es kann also eine sogenannte Unterabtastung durchgeführt werden.

Wie in Fig. 1a ebenfalls schematisch dargestellt ist, können sich die einzelnen Segmente auch überlappen, so wie beispielsweise Segment S1(2) und Segment S1(3). Die Mehrzahl von Segmenten S1(i) können auch "Lücken" aufweisen, wie es beispielsweise zwischen dem Segment S1(3) und S1(4) der Fall ist. Das heißt, das erste Informationssignal IS1 kann von der Versatzbestimmungseinrichtung 20 vollständig in eine Mehrzahl von Segmenten unterteilt werden oder aber auch nur teilweise oder abschnittsweise in eine Mehrzahl von Segmenten zerlegt werden. Diese Segmente S1(i) können Lücken oder Überlappungen aufweisen, sowie unterschiedliche Zeiträume oder eine unterschiedliche Anzahl von Abtastwerten oder sonstigen Werten zur Bestimmung eines Versatzes aufweisen.

Die Mehrzahl von Segmenten S1(i) kann beispielsweise aufgrund eines identischen oder vergleichbaren Merkmals einer Informationseinheit mit Hilfe der Versatzbestimmungseinrichtung 20 dem zweiten Informationssignal IS2 zugeordnet werden. Die Versatzbestimmungseinrichtung 20 ist nun so ausgebildet, die Versatzwerte VW(i), die die Mehrzahl von Segmenten zu dem zweiten Informationssignal IS2 zeitlich ausrichten, zu bestimmen. Im vorliegenden stark vereinfachten Fall (Fig. 1a), erfolgt die Zuordnung der Segmente zu dem zweiten Informationssignal beispielsweise aufgrund einer identischen oder ähnlichen Signalform. Diese Zuordnung der Segmente S1(i) zu dem zweiten Informationssignal kann die Versatzbestimmungseinrichtung beispielsweise mit Hilfe einer Kreuzkorrelation durchführen. Die Zuordnung kann dabei beispielsweise aufgrund von identischen oder ähnlichen Frames bzw. Bildern bei Videosignalen oder auch durch identische oder ähnliche Informationssignalformen oder aufgrund von sonstigen Merkmalen, wie z.B. gemittelten Energiewerten eines Signals, Helligkeitswerten, Farbwerten etc. erfolgen.

Das zweite Informationssignal IS2 kann nun eine zum ersten Informationssignal IS1 unterschiedliche Abtastrate aufweisen, und kann deshalb auch eine unterschiedliche relative Abtastzeitpunkt-Achse (Abzp2) aufweisen. Das heißt, bei den entsprechenden Bezugsachsen zu dem ersten Informationssignal IS1 und IS2 kann es sich um unterschiedlich skalierte Achsen handeln.

So kann beispielsweise dem Segment S1(1) von der Versatzbestimmungseinrichtung 20 ein Versatzwert VW(1) zugeordnet werden, dem Segment S1(2) ein Versatzwert VW(2), dem Segment S1(3) ein Versatzwert VW(3), dem Segment S1(4) ein Versatzwert S4 und so fort. Die Versatzwerte VW(i) können z.B. bestimmten Zeiträumen, einer bestimmten Anzahl von Abtastzeitpunkten, oder auch einer bestimmten Anzahl von Frames entsprechen. Einer Folge von Segmenten S1(1 bis i) wird eine entsprechende Folge von Versatzwerten VW(1 bis i) zugeordnet, auf deren Basis die Einrichtung 40 einen Abtastratenunterschied zwischen dem ersten Informationssignal IS1 und dem zweiten Informationssignal IS2 bestimmen kann. Die Versatzwerte VW(i) werden zu diesem Zweck der Einrichtung 40 zur Berechnung des Abtastratenunterschieds zugeführt.

Bei einigen Ausführungsbeispielen kann es sich bei dem ersten Informationssignal und bei dem zweiten Informationssignal, um ähnliche oder identische Signale handeln, wobei zumindest eines der Informationssignale über einen Kommunikationskanal übertragen wurde. Bei einem der beiden Informationssignale IS1, IS2 kann es sich auch um ein ungestörtes Referenzsignal handeln, und bei dem anderen Informationssignal um das dazu, nach einer Übertragung über eine (Tele)-Kommunikationsverbindung oder über ein Übertragungsnetzwerk gestörte oder degradierte Informationssignal. Eines der Informationssignale IS1, IS2 kann beispielsweise ein zu testendes Signal sein, das beispielsweise das Ausgangssignal eines (Tele-) Kommunikationssystems oder Netzwerks oder allgemein eines zu untersuchendes Elementes ist. Das andere der Informationssignale IS1, IS2 kann ein Original- oder auch Referenzsignal sein, das in der Regel als Eingangssignal in ein zu untersuchendes Übertragungselement bzw. Kommunikationskanal oder Übertragungstestsystem etc. eingespeist wird, und das mit dem Ausgangssignal nach der Übertragung verglichen werden soll. Neben der zeitlichen Ausrichtung der Informationssignale und einer entsprechenden Zuordnung der Merkmale oder Signalformen kann durch die Bestimmung eines Abtastratenunterschieds mit Hilfe der erfindungsgemäßen Vorrichtung 10 ein verbesserter oder objektiverer Vergleich durch die Anpassung der Abtastrate, die sich aufgrund des Übertragungsweges der Informationssignale ändern kann, gegeben sein. Solch ein Abtastratenunterschied zwischen den Informationssignalen IS1, IS2 kann beispielsweise durch unterschiedliche Taktgeber (clocks) auf der Eingangsseite und auf der Ausgangsseite, oder auch aufgrund des verwendeten Übertragungsverfahrens und der entsprechenden Software teils absichtlich, teils durch Toleranzen entstehen.

Wie in Fig. 1b schematisch dargestellt ist, kann z.B.ein gestörtes zweites Informationssignal IS2 ein Ausgangssignal eines Störungstestsystems oder eines Telekommunikationssystems sein, welches mit dem ersten Informationssignal IS1 -dem Eingangssignal- bezüglich der Übertragungsqualität verglichen werden soll. In Fig. 1b weist das Informationssignal IS2 beispielsweise zwei Fehler E1, E2 gegenüber dem ersten Informationssignal IS1 auf. Diese Fehler E1, E2 können beispielsweise durch eine gestörte Übertragung zustande gekommen sein.

Gemäß Ausführungsbeispielen kann die Vorrichtung 10 zur Bestimmung eines Abtastratenunterschieds zwischen einem ersten Informationssignal IS1 und einem zweiten gestörten Informationssignal IS2 eine Versatzbestimmungseinrichtung 20 aufweisen. Diese Versatzbestimmungseinrichtung 20 kann Versatzwerte VW(i) bestimmen, die die Mehrzahl von Segmenten S1(i) des ersten Informationssignals IS1 zu den zweiten gestörten Informationssignal IS2 zeitlich ausrichten. Die so bestimmten Versatzwerte können dann der Einrichtung 40 zur Berechnung des Abtastratenunterschieds auf Basis der Versatzwerte VW(i) zugeführt werden. Diese kann dann einen Abtastratenunterschied bestimmen. Bei dem von der Einrichtung 40 bestimmten Abtastratenunterschied kann es ich um einen gemittelten Abtastratenunterschied handeln. Aus dem Abtastratenunterschied kann dann auch das Abtastratenverhältnis zwischen dem ersten und dem zweiten Informationssignal ermittelt werden.

In Ausführungsbeispielen der vorliegenden Erfindung kann die Einrichtung 40 zur Berechnung eines Abtastratenunterschieds ausgebildet sein, Differenzen zwischen den Versatzwerten VW(i), die unterschiedlichen Segmenten S1(i) des ersten Informationssignals IS1 zugeordnet sind, zu bestimmen, um Differenzversatzwerte DVW(i) zu erhalten. Die Einrichtung 40 zur Berechnung des Abtastratenunterschieds kann nun ferner so ausgebildet sein, dass die Berechnung des Abtastratenunterschieds auf Basis der Differenzversatzwerte DVW(i) durchgeführt wird. Bei den Differenzversatzwerten kann es sich also beispielsweise um die Differenz oder um die absolute Differenz zwischen aufeinanderfolgenden Versatzwerten handeln. In anderen Worten kann beispielsweise der Differenzversatzwert DVW(i) gleich VW(i+1)-VW(i) oder auch der Absolutwert |VW(i+1)-VW(i)| sein.

In Ausführungsbeispielen der vorliegenden Erfindung kann die Einrichtung 40 zur Berechnung des Abtastratenunterschieds ausgebildet sein, den Abtastratenunterschied zwischen dem ersten Informationssignal IS1 und dem zweiten Informationssignal IS2 durch statistische Auswertung einer Verteilung, die von den Versatzwerten VW(i) abhängt, zu bestimmen oder zu berechen. Die Versatzwerte, die beispielsweise einer Anzahl von Abtastzeitpunkten oder Samples entsprechen können, können unterschiedliche Werte aufweisen, die dann mit Hilfe der Einrichtung zur Berechnung des Abtastratenunterschieds statistisch ausgewertet und so ein Abtastratenunterschied bestimmt werden kann.

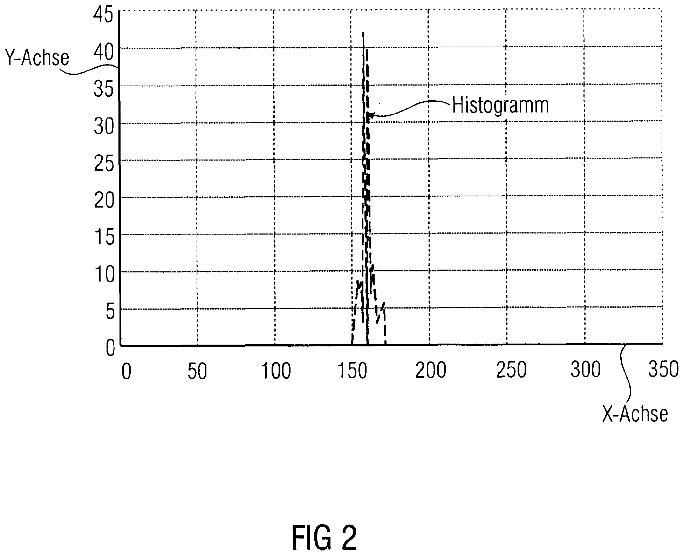

Diese statistische Auswertung kann gemäß einiger Ausführungsbeispiele mit Hilfe einer Histogrammanalyse durchgeführt werden. Dazu können beispielsweise die Versatzwerte VW(i) oder auch die Differenzversatzwerte DVW(i) in ein Histogramm bzw. histogrammartig, also in Intervalle oder Klassen aufgeteilt, sortiert und aufgetragen werden. Die statistische Auswertung kann mit Hilfe eines Computerprogramms mit einem Programmcode, der das Verfahren zur Bestimmung eines Abtastratenunterschieds ausführt, durchgeführt werden. Insbesondere liegt die Erfindung also auch in einem Computerprogramm oder Computerprogrammprodukt, welches das später noch genauer beschriebene Verfahren zur Bestimmung eines Abtastratenunterschieds durchführt. Die Versatzwerte VW(i) oder die Differenzversatzwerte DVW(i) können, sowie in Fig. 2 dargestellt, in ein Histogramm aufgetragen werden. Auf der X-Achse des Histogramms sind Versatzwerte VW(i)aufgetragen. Bei den Versatzwerten VW(i) kann es sich hier beispielsweise um Frames handeln. In anderen Ausführungsbeispielen können auf der X-Achse z.B. auch die Differenzversatzwerte, Abtastzeitpunkte oder andere Informationseinheiten zur Abtastratenunterschiedsbestimmung aufgetragen sein.

Wie bei Histogrammen üblich, kann der jeweilige Wertebereich in verschiedene Klassen oder Intervalle mit vorbestimmter Intervallbreite aufgeteilt sein. Diese müssen nicht notwendigerweise gleich breit sein. Über jede Klasse oder jedes Intervall wird ein Rechteck errichtet dessen Fläche proportional zur klassenspezifischen Häufigkeit des Messwerts ist. Im vorliegenden Fall heißt das also, dass auf der Y-Achse des Histogramms die Häufigkeit des jeweiligen Versatzwertes aufgetragen ist.

Die Einrichtung 40 zur Berechnung des Abtastratenunterschieds kann also eine statistische Auswertung einer Verteilung auf Basis der von der Versatzbestimmungseinrichtung bestimmten Versatzwertedurchführen. Es kann also z.B. die Häufigkeitsverteilung der von der Versatzbestimmungseinrichtung 20 bestimmten Versatzwerte VW(i) oder auch der Differenzversatzwerte DVW(i) zur Berechnung des Abtastratenunterschieds zwischen dem ersten Informationssignal IS1 und IS2 herangezogen werden. Wie in Fig. 2 dargestellt ist, ergibt sich bei dem dortigen Histogramm eine statistische Tendenz, z.B. ein Mittelwert (Center) von ca. 160 Frames mit einer Standardweichung (StdDev) von 3,77 und einer Zuverlässigkeit (Reliability) von 94,444%.

Die Einrichtung 40 zur Berechnung des Abtastratenunterschieds durch statistische Auswertung einer Verteilung, die von den Versatzwerten VW(i) abhängt, kann beispielsweise auch so ausgebildet sein, dass Ausreißer bzw. sehr grobe Abweichungen oder Fehler eines Wertes der Verteilung aus der Verteilung entfernt werden bzw. nicht berücksichtigt werden bei der weiteren Auswertung.

Aus dem Histogramm kann nun z.B. mit Hilfe einer Wahrscheinlichkeitsdichtefunktion (Probability Density Function (PDF)) eine zentrale Tendenz, z.B. ein Median oder ein Mittelwert des Histogramms bestimmet werden. Dieser Median oder Mittelwert kann dem zu bestimmenden Abtastratenunterschied entsprechen. Bei dem Histogramm kann es sich ferner um ein normalisiertes Histogramm handeln.

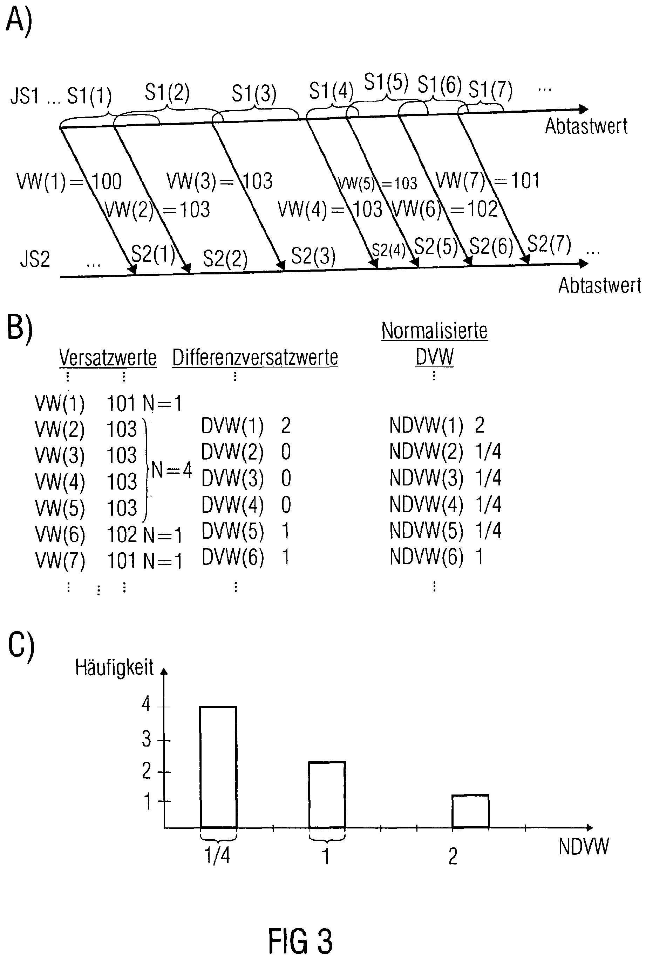

In Fig. 3 ist nun in stark vereinfachter Form ein Ausführungsbeispiel zum Verfahren zur Bestimmung eines Abtastratenunterschieds zwischen einem ersten Informationssignal IS1 und einem zweiten Informationssignal IS2 schematisch dargestellt. In Fig. 3, Abschnitt A ist das erste Informationssignal IS1 symbolisch auf einer Achse von Abtastwerten angeordnet. Das Informationssignal IS1 kann von der Versatzbestimmungseinrichtung wieder in eine Reihe von Segmenten S1(1) bis S1(7) unterteilt werden. Das zweite Informationssignal IS2 ist ebenfalls symbolisch auf einer zweiten Achse von Abtastwerten angeordnet, wobei die Achsensskalierungen der beiden Achsen unterschiedlich sein können. Das heißt, das erste Informationssignal IS1 hat eine zur Abtastwertachse des zweiten Informationssignals unabhängige Abtastwertachse. Die einzelnen Segmente S1(1) bis S1(7) werden dann dem zweiten Informationssignal IS2 und entsprechenden Signalpunkten oder Segmenten S2(1) bis S2(7) auf der zweiten Abtastwertachse durch die Versatzbestimmungseinrichtung zugeordnet. Die Versatzbestimmungseinrichtung 20 bestimmt nun für jedes der Mehrzahl von Segmenten S1(1) bis S1(7) des ersten Informationssignals IS1 einen zugeordneten Versatzwert VW(1) bis VW(7), die die Mehrzahl von Segmenten S1(1) bis S1(7) zu dem zweiten Informationssignal und den entsprechenden Informationssignalpunkten oder Segmenten S2(1) bis S2(7) zeitlich bzw. bezüglich der Abtastwerte ausrichtet.

Im vorliegenden Ausführungsbeispiel weist nun beispielsweise das Segment S1(1) des ersten Informationssignals IS1 einen relativen Versatzwert VW(1) von 101 Abtastwerte auf. Das zweite Segment S1(2) hat einen relativen Versatzwert VW(2) von 103 Abtastwerte gegenüber dem Informationssignal IS2 und dem entsprechenden Informationssegment S2(2). Für das dritte Segment S1(3) ergibt sich ein Wert VW(3) von 103 gegenüber S2(3), für den vierten Versatzwert VW(4) des Segments S1(4) ergibt sich ebenfalls ein Wert von 103 gegenüber dem zweiten Informationssignalsegment S2(4). Das Segment S1(5) weist einen Versatzwert VW(5) von 103 Abtastwerte gegenüber dem entsprechenden Segment S2(5) auf, das Segment S1(6) weist einen Versatzwert VW(6) von 102 Abtastwerte gegenüber S2(6) auf und das Segment S1(7) hat beispielsweise ein Versatzwert VW(7) von 102 Abtastwerte gegenüber dem entsprechenden Informationssignalsegment S2(7) des zweiten Informationssignals IS2. Die Versatzbestimmungseinrichtung kann gemäß einiger Ausführungsbeispiele ausgebildet sein, die relativen Versatzwerte zwischen den Segmenten S1(i) und den korrespondierenden Informationssignalpunkten oder Segmenten S2(i) zu bestimmen.

Wie nun in Fig. 3, Abschnitt B schematisch dargestellt ist, können diese Versatzwerte in einer Tabelle eingetragen werden. Die Einrichtung 40 zur Berechnung des Abtastratenunterschieds auf der Basis der Versatzwerte kann ausgebildet sein, die Versatzwerte und die entsprechenden bestimmten Zahlenwerte in einer Tabelle oder Liste einzutragen. In einer ersten Spalte sind beispielsweise die Versatzwerte mit den entsprechend bestimmten Zahlenwerten, also zum Beispiel VW(1)=101 und VW(2)=103 usw. aufgetragen. Die Einrichtung 40 zur Berechnung des Abtastratenunterschieds ist optional ferner ausgebildet die bereits oben erwähnten Differenzversatzwerte DVW(i) aus den entsprechenden Versatzwerten VW(i) zu berechnen.

Beispielsweise ergibt sich als erster Differenzversatzwert DVW(1) aus der Differenz zwischen dem zweiten Versatzwert VW(2) und dem ersten Versatzwert VW(1) der Wert 2. Das heißt, die Verschiebung des ersten Informationssignals zu dem zweiten Informationssignal weist nicht nur einen konstanten Anteil auf, sondern zwischen den Segmenten können aufgrund des Abtastratenunterschiedsunterschiedliche Versatzwerte vorliegen. Weisen bestimmte Abschnitte der Informationssignale IS1 und IS2 nur eine konstante zeitliche Versetzung auf, so ergibt sich ein konstanter Versatzwert, wie es beispielsweise bei den Versatzwerten VW(2) bis VW(5) der Fall ist, die einen konstanten Versatzwert von 103 Abtastwerte aufweisen und dementsprechende Differenzversatzwerte DVW(2) bis DVW(4) = 0 aufweisen.

Die Einrichtung 40 zur Berechnung des Abtastratenunterschieds kann gemäß einiger Ausführungsbeispiele ausgebildet sein, eine Folge von N (für N ≥ 2) aufeinanderfolgenden identischen Versatzwerten VW(i), eine Folge von N, den Versatzwerten zugeordneten, aufeinanderfolgenden identischen normalisierten Differenzversatzwerte NDVM(i) zuzuweisen. Diese normalisierten Differenzversatzwerte NDVM(i) können dem Quotienten aus dem Differenzversatzwert bezüglich des N+1-ten Versatzwertes VW(N+1) und dem N-ten Versatzwert VW(N) und der Anzahl N entsprechen. Es gilt also für eine Folge von N zugeordneten normalisierten Versatzwerten NDVW = ((VW(N+1) - VW(N))/N).

In dem vereinfachten Beispiel in Fig. 3 ergibt sich also für die N=4 aufeinanderfolgenden identischen Versatzwerte VW(2) bis VW(5), für N=4 entsprechend aufeinanderfolgenden, den Versatzwerten zugeordneten, normalisierten Differenzversatzwerte NDVW(2) bis NDVW(5), ein Wert von 1/4. Dieser Wert ergibt sich, wie oben beschrieben, aus dem Quotienten des Differenzversatzwertes bezüglich des N+1-ten Versatzwertes, also hier VW(6) und dem N-ten Versatzwert, hier VW(5). Dieser Wert entspricht dem Differenzversatzwert DVW(5)=1, welcher dann durch die Anzahl N=4 der aufeinanderfolgenden identischen Versatzwerte dividiert wird. Daraus ergibt sich also hier für eine Folge von N=4 aufeinanderfolgende identische normalisierte Differenzversatzwerte NDVW(2) bis NDVW(5) jeweils ein Wert von 1/4. Das heißt, ein Differenzversatzwertesprung wird gleichmäßig über die vorhergehenden konstanten Differenzversatzwerte verteilt.

In einem anderen Ausführungsbeispiel ist die Einrichtung 40 zur Berechnung des Abtastratenunterschieds ausgebildet einen Versatzwertesprung gleichmäßig über die vorhergehenden konstanten Versatzwerte zu verteilen. Beispielsweise wird also der Versatzwert VW(6) = 102 auf die vorhergehenden konstanten Versatzwerte VW(2) bis VW(5) = 103 verteilt, so dass jeder dieser Versatzwerte einen Wert von 102,8 zugewiesen bekommt.

Wie in Fig. 3, Abschnitt C gezeigt ist, können nun beispielsweise die normalisierten Differenzversatzwerte NDVW(i) in Form eines Histogramms aufgetragen werden. Auf der X-Achse des Histogramms sind in diesem Ausführungsbeispiel die normalisierten Differenzversatzwerte aufgetragen. Die Differenzversatzwerte sind hier in Intervalle oder in Klassen mit einer Intervallbreite von 1/4 aufgetragen. Auf der Y-Achse wird die Häufigkeit des entsprechenden Wertes aufgetragen. Im vorliegenden Beispiel wird also für den normalisierten Differenzversatzwert 1/4 ein Balken bis zur Höhe 4, aufgetragen, die normalisierten Differenzversatzwerte NDVW (1) und NDVW(6) werden entsprechend eingetragen. Wie oben bereits erwähnt, kann die Einrichtung 40 zur Berechnung des Abtastratenunterschieds ausgebildet sein, Ausreißer in den Verteilungswerten, wie beispielsweise den Wert NDVW(1) = 2, zu entfernen und bei der Auswertung des Histogramms nicht zu berücksichtigen.

Aus der Häufigkeitsverteilung kann von der Einrichtung 40 zur Berechnung des Abtastratenunterschieds beispielsweise eine zentrale Tendenz bestimmt werden, und ein entsprechender mittlerer Differenzversatzwert oder Delaysprung, pro Abtastwert (Delay Difference per Sample) bestimmt werden. Dazu kann beispielsweise mit Hilfe einer Wahrscheinlichkeitsdichtefunktion (Probability Density Function (PDF)) aus einem Histogramm oder einer Häufigkeitsverteilung der am häufigsten auftretende mittlere Delaysprung pro Abtastwert herausgelesen werden. Falls dieser Wert eine ausreichende Häufigkeit aufweist, dann kann dieser Wert als zuverlässiges Maß für die Abweichung der Abtastrate/oder Framerate dienen. Um eine relativ hohe Zahl von Versatzwerten bzw. Messpunkten zu bekommen, kann das erste Informationssignal IS1 in sehr kurze zeitliche Abschnitte bzw. Segmente oder Frames unterteilt werden. Die zeitliche Dauer dieser Segmente kann beispielsweise kleiner 5s, also z.B. kleiner 1s oder auch kleiner 0.1s sein.

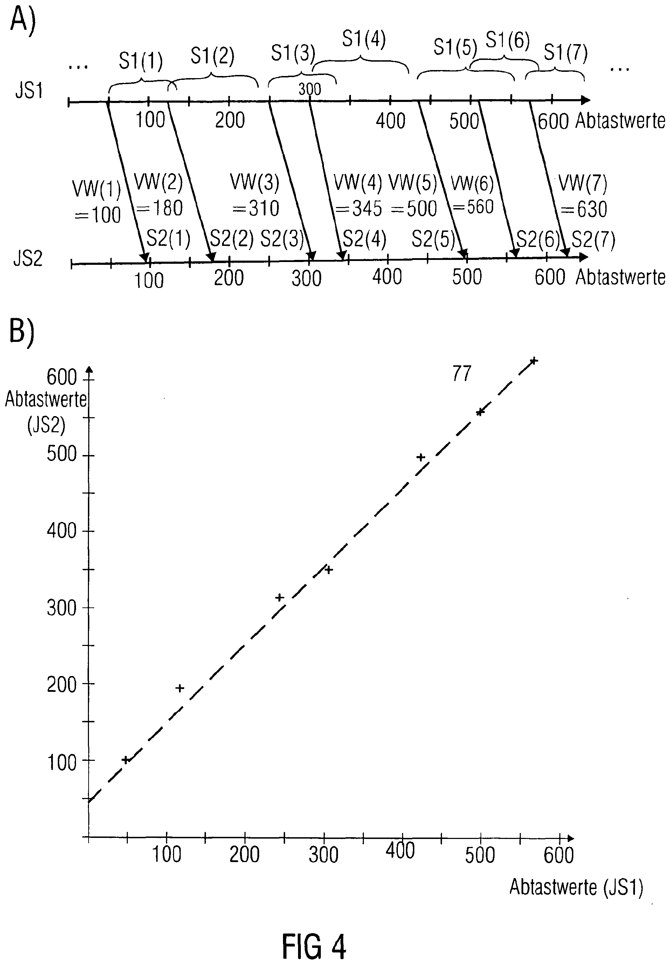

In Fig. 4 ist ein weiteres Ausführungsbeispiel zum Verfahren zur Bestimmung eines Abtastratenunterschieds schematisch dargestellt. In Abschnitt A ist das erste Informationssignal IS1 und das zweite Informationssignal IS2 wieder auf entsprechenden Abtastwert-Achsen dargestellt. Das erste Informationssignal IS1 wird von der Versatzbestimmungseinrichtung 20 in Segmente S1(1) bis S1(7) unterteilt. Analog, wie im Zusammenhang mit der Fig. 3 beschrieben ist, weisen diese Segmente wieder entsprechende Versatzwerte VW(1) bis VW(7) gegenüber den entsprechenden Stellen oder Segmenten S2(1) bis S2(7) des zweiten Informationssignals (IS2) auf. Diese Versatzwerte VW(i) werden von der Versatzbestimmungseinrichtung 20 bestimmt. Die Versatzwerte VW(1) bis VW(7) richten die Segmente S1(1) bis S1(7) zeitlich zu dem zweiten Informationssignal IS2 aus. In dem Ausführungsbeispiel in Fig. 4 handelt es sich bei den Versatzwerten, im Gegensatz zu dem Ausführungsbeispiel in Fig. 3 um absolute Versatzwerte. Das Segment S1(1) weist also einem absoluten Versatzwert VW(1) von 100 Abtastwerten gegenüber dem Informationssignal IS2 auf. Analog ergeben sich für die entsprechenden Segmente S1(i) folgende absolute Versatzwerte: VW(2) = 180, VW(3) = 310, VW(4) = 345, VW(5) = 500, VW(6) = 560 und VW(7) = 630. Eine Einrichtung 40 zur Berechnung des Abtastratenunterschieds auf Basis der Versatzwerte kann nun gemäß diesem Ausführungsbeispiel ausgebildet sein, eine statistische Auswertung dieser Verteilung unter Zuhilfenahme einer Regressionsanalyse durchzuführen. Wie in Fig. 4, Abschnitt B schematisch dargestellt ist, können dazu die absoluten Versatzwerte VW(1) bis VW(7) in einem Diagramm über den zugeordneten Abtastwerten der Segmente S1(i) des ersten Informationssignals aufgetragen werden. Aus der daraus resultierenden Regressionsgerade 77 kann dann aus der Geradensteigung m ein Abtastratenunterschied und aus dem Schnittpunkt t mit der Y-Achse ein mittlerer absoluter Versatzwert durch die Einrichtung 40 zur Berechnung eines Abtastratenunterschieds bestimmen.

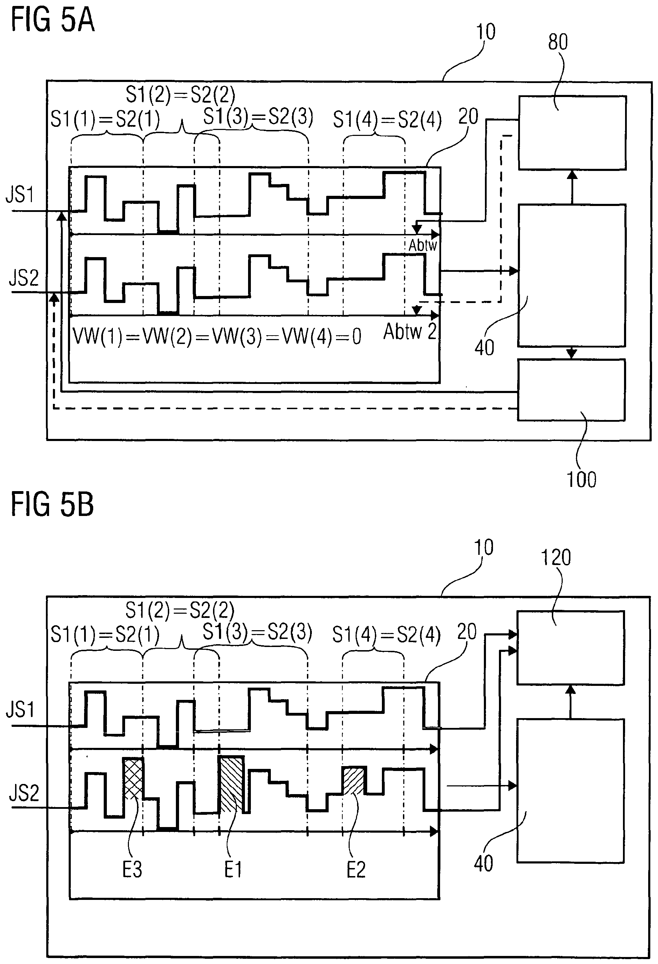

In Fig. 5a ist eine schematische Darstellung eines weiteren Ausführungsbeispiels für eine Vorrichtung 10 zur Bestimmung eines Abtastratenunterschieds zwischen einem ersten Informationssignal IS1 und einem zweiten Informationssignal IS2 gezeigt. In diesem Ausführungsbeispiel weist die Vorrichtung 10 zur Bestimmung eines Abtastratenunterschieds ferner eine Abtastratenänderungseinrichtung 80 auf, die ausgebildet ist, eine Reduktion einer Abweichung der Abtastraten des ersten IS1 und zweiten IS2 Informationssignals vorzunehmen, falls der Abtastratenunterschied größer ist, als ein vorbestimmter Grenzwert. Die Abtaständerungseinrichtung 80 kann also basierend auf dem von der Einrichtung 40 zur Berechnung des Abtastratenunterschieds zwischen dem ersten Informationssignal und des zweiten Informationssignals ermittelten Abtastratenunterschieds eine Reduktion dieser Abweichung der Abtastraten, also eine Angleichung der Abtastraten zwischen dem ersten und dem zweiten Informationssignal vornehmen. Dazu kann die Abtastratenänderungseinrichtung 80 beispielsweise ausgebildet sein, die Abtastrate des ersten Informationssignals oder des zweiten Informationssignals oder auch beider Informationssignale IS1, IS2 zu ändern, so dass ein Abtastratenunterschied zwischen den zwei Informationssignalen kleiner wird. Dazu kann die Abtastratenänderungseinrichtung eine Abtastratenkonvertierung (Sample Rate Conversion) durchführen. Die Abtastratenänderungseinrichtung 80 kann ausgebildet sein, so dass die Abtastraten des ersten Informationssignals und des zweiten Informationssignals vollständig angeglichen werden. Die Abtastratenänderungseinrichtung kann eine Reduktion, abhängig von einem vorbestimmten Grenzwert bezüglich des Abtastratenunterschieds zwischen dem ersten Informationssignal und des zweiten Informationssignals durchführen. Beispielsweise kann dieser Grenzwert so definiert sein, dass kein Abtastratenunterschied, also nur ein Abtastratenunterschied von Null zwischen dem ersten Informationssignal und dem zweiten Informationssignal toleriert wird. Der vorbestimmte Grenzwert kann aber beispielsweise auch zwischen 1 Abtastpunkt pro Frame (Samples pro Frame) und 10 Abtastpunkte pro Frame oder Segment liegen. In anderen Ausführungsbeispielen der vorliegenden Erfindung kann dieser vorbestimmte Grenzwert auch anders definiert sein.

Wie in Fig. 5a schematisch dargestellt ist, kann die Vorrichtung 10 zur Bestimmung eines Abtastratenunterschieds ferner eine Einrichtung 100 zur zeitlichen Ausrichtung des ersten Informationssignals IS1 und des zweiten Informationssignals IS2 zueinander aufweisen. Die Einrichtung 100 zur zeitlichen Ausrichtung des ersten Informationssignals IS1 und des zweiten Informationssignals IS2 kann ausgebildet sein, durch die zeitliche Ausrichtung einen zweiten zueinander angeordneten Zustand der Informationssignale IS1 und IS2 zu erzeugen. Dieser zweite zueinander angeordnete Zustand kann einem zweiten zueinander zeitlich ausgerichteten oder angeordneten Zustand entsprechen. Dazu kann die Einrichtung 100 ausgebildet sein, das erste Informationssignal IS1 zu dem zweiten Signal IS2 auszurichten oder auch das zweite Informationssignal IS2 zu dem ersten Informationssignal IS1. Denkbar ist natürlich auch, dass das erste Informationssignal IS1 und das zweite Informationssignal IS2 gegenseitig zeitlich zueinander ausgerichtet werden. Wie in Fig. 5a schematisch dargestellt ist, sind dann die Segmente S1(1) bis S1(4) im idealisierten Fall exakt zu den entsprechenden Informationssegmenten oder Informationspunkten S2(1) bis S2(4) ausgerichtet. Die Einrichtung 100 zur zeitlichen Ausrichtung des ersten Informationssignals und des zweiten Informationssignals kann ferner ausgebildet sein, so dass diese zeitliche Ausrichtung nach der Reduktion der Abweichung des Abtastratenunterschieds zwischen dem ersten und dem zweiten Informationssignal durchgeführt wird, um einen zweiten zeitlich ausgerichteten Zustand zwischen dem ersten Informationssignal IS1 und dem zweiten Informationssignal zu erzeugen. Im Idealfall kann der Abtastratenunterschied vollständig ausgeglichen werden, das heißt, es existiert kein Abtastratenunterschied mehr, so dass dann die Versatzwerte VW(1) bis VW(4) den Wert Null aufweisen. Das heißt, es gibt keinen Versatz und keinen Abtastratenunterschied zwischen den Segmenten des ersten Informationssignals S1(i) und den Segmenten S2(i) des zweiten Informationssignals.

Gemäß einiger Ausführungsbeispiele kann die Abtastratenänderungseinrichtung 80 ausgebildet sein, die Reduktion der Abweichung der Abtastraten iterativ durchzuführen, bis ein Abbruchskriterium erfüllt ist. Dazu kann beispielsweise die Einrichtung 40 zur Bestimmung des Abtastratenunterschieds ebenfalls dazu ausgebildet sein, eine Berechnung oder Bestimmung des Abtastratenunterschieds auf Basis der Versatzwerte iterativ bzw. wiederholt durchzuführen und diese wiederholt berechneten Abtastratenunterschiedswerte der Abtastratenänderungseinrichtung 80 zuzuführen, woraufhin diese eine iterative Reduktion der Abweichung der Abtastraten vornehmen kann bis das Abbruchskriterium erfüllt ist. Bei dem Abbruchskriterium kann es sich beispielsweise um den oben erwähnten Grenzwert, um einen zeitlichen Wert, um einen Wert der von einer Rechnerleistung auf dem das erfindungsgemäße Verfahren durchgeführt wird oder einer Einstellung, die von einer Bedienperson der erfindungsgemäßen Vorrichtung vorgegeben wird, handeln.

Die Vorrichtung 10 zur Bestimmung eines Abtastratenunterschieds zwischen einem ersten Informationssignal IS1 und einem zweiten Informationssignals IS2 kann, wie in Fig. 5b schematisch dargestellt ist, ferner eine Qualitätsbestimmungseinrichtung 120 aufweisen, die ausgebildet ist, einen Informationsqualitätsunterschied zwischen dem ersten Informationssignal IS1 und dem zweiten Informationssignal IS2 zu bestimmen. Die Qualitätsbestimmungseinrichtung 120 kann ausgebildet sein, den Informationsqualitätsunterschied zwischen dem ersten Informationssignal und dem zweiten Informationssignal in einem zweiten, beispielsweise von der Einrichtung 100 zur zeitlichen Ausrichtung, zueinander angeordneten Zustand zu bestimmen. Ferner kann die Qualitätsbestimmungseinrichtung 120 ausgebildet sein, einen Informationsqualitätsunterschied zwischen dem ersten und dem zweiten Informationssignal in dem zweiten zueinander angeordneten Zustand zu bestimmen, und zwar nach Reduktion der Abweichung des Abtastratenunterschieds.

In Fig. 5b ist das erste Informationssignal IS1 und das zweite Informationssignal IS2 sowohl zeitlich angepasst (Temporal Alignment), als auch die Abtastraten durch eine Abtastratenänderungseinrichtung 80 bis zu einem vorbestimmten Grenzwert angepasst. Der Qualitätsbestimmungseinrichtung 120 werden nun diese beiden Informationssignale IS1, IS2 zugeführt, so dass ein objektiver Informationsqualitätsunterschied zwischen dem ersten Informationssignal und dem zweiten Informationssignal mit Hilfe der Qualitätsbestimmungseinrichtung bestimmt werden kann. Die Qualitätsbestimmungseinrichtung kann beispielsweise ein erstes Eingangsinformationssignal IS1 in ein Netzwerk, z.B. in ein Telekommunikationsnetzwerk oder allgemein in ein Übertragungsnetzwerk, mit einem Ausgangsinformationssignal IS2 nach der Übertragung durch dieses Netzwerk vergleichen. Weist beispielsweise das übertragene Informationssignal IS2 Fehler E1, E2, wie schematisch in Fig. 5b dargestellt ist, gegenüber dem ursprünglichen Informationssignal IS1 auf, so kann dieser objektive Informationsqualitätsunterschied durch die Qualitätsbestimmungseinrichtung bestimmt bzw. quantifiziert werden. Bei dieser Bestimmung können das erste Informationssignal IS1 und das zweite Informationssignal IS2 in dem zweiten zueinander angeordneten bzw. zeitlich ausgerichteten Zustand vorliegen. Diese Ausrichtung bezüglich der zeitlichen Anordnung kann durch die oben beschriebenen Einrichtungen 100 zur zeitlichen Ausrichtung der Informationssignale durchgeführt werden und die Reduktion der Abweichung einer Abtastrate zwischen den beiden Informationssignalen IS1 und IS2 durch die Abtastratenänderungseinrichtung 80. Mit der Qualitätsbestimmungseinrichtung 120 lässt sich dann beispielsweise auch der Informationsqualitätsübertragungsunterschied zwischen unterschiedlichen Netzwerken oder Übertragungssysteme bzw. Telekommunikationskanälen mit denen die Informationen bzw. die Informationssignale übertragen werden bestimmen. Weist beispielsweise dasselbe ursprüngliche Informationssignal IS1 bei der Übertragung durch ein anderes Netzwerk oder ein verändertes Netzwerk zusätzliche Störungen, wie z.B. einen weiteren Fehler E3 auf, so kann aus der Bestimmung des Informationsqualitätsunterschieds zwischen dem zweiten Informationssignal mit den Störungen, E1, E2 und der Übertragung mit den Fehlern E1, E2 und E3 auf eine "schlechtere" Übertragungsqualität des anderen oder veränderten Netzwerkes geschlossen werden. Dies ist natürlich eine stark vereinfachte Beschreibung zur Veranschaulichung der Qualitätsmessung.

Die vorliegende Erfindung stellt ein robustes Verfahren zur Erkennung, Berechnung bzw. Bestimmung von Abtastratenunterschieden zwischen einem ersten Informationssignal und einem zweiten Informationssignal zur Verfügung. Die erfindungsgemäße Vorrichtung und das Verfahren können auch für sehr kurze Signale bzw. sehr kurze Segmente und auch bei geringen Abweichungen der Abtast-/Frameraten noch zuverlässig funktionieren. Die Vorrichtung und das Verfahren kann natürlich auch für längere oder lange Segmente und bei größeren Abweichungen der Abtastraten eingesetzt werden.

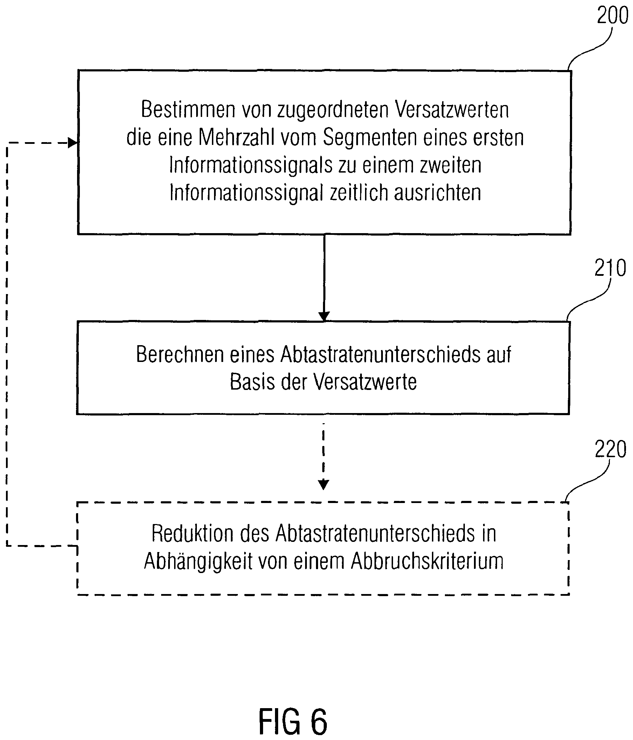

In Fig. 6 ist ein Flussdiagramm zum Verfahren zur Bestimmung eines Abtastratenunterschieds zwischen einem ersten Informationssignal IS1 und einem zweiten Informationssignal IS2 gemäß einem Ausführungsbeispiel der vorliegenden Erfindung gezeigt. Das Verfahren weist einen Schritt des Bestimmens 200 von zugeordneten Versatzwerten für jedes einer Mehrzahl von Segmenten des ersten Informationssignals IS1, die die Mehrzahl von Segmenten zu dem zweiten Informationssignal IS2 zeitlich ausrichten und ferner einen Schritt des Berechnens oder Bestimmens 210 des Abtastratenunterschieds auf Basis dieser Versatzwerte auf. In Abhängigkeit der Größe des Abtastratenunterschiedes und eines entsprechenden Abbruchskriterium kann das Verfahren auch eine Reduktion 220 des Abtastratenunterschieds und eine iterative Durchführung der Schritte 200, 210 bis zum Erreichen des Abbruchskriteriums aufweisen.

Gemäß einem Ausführungsbeispiel werden zunächst die Signale IS1, IS2 in sehr kurze zeitliche Abschnitte (Frames bzw. Segmente) unterteilt. Diese Frames werden dann einander zugeordnet . Die zeitlichen Abschnitte (Segmente oder Frames) können kürzer sein als Analysefenster, die benötigt werden, um aus einer Verschiebung spektrale Komponenten der Informationssignale Rückschlüsse auf einen Abtastratenunterschied ziehen zu können. Durch die sehr kurzen Analysefenster kann zwar die Zuverlässigkeit der Delaymessung bzw. der Versatzwertmessung beeinträchtigt sein, es kommt aber dafür innerhalb eines Frames zu geringeren Abweichungen aufgrund möglicher Abtastratenunterschiede. Zusätzlich stehen auf diese Weise eine relativ hohe Zahl von Messpunkten (Versatzwerte) für die nachfolgenden Verfahrensschritte zur Verfügung. Eine hohe Zahl von Messpunkten kann für eine erfolgreiche Anwendung von statistischen Methoden wesentlich sein.

Gemäß einiger Ausführungsbeispiele zum Verfahren zur Bestimmung eines Abtastratenunterschieds wird nun für jeden Frame oder jedes Segment der Delayunterschied bzw. der Differenzversatzwert zu seinem Vorgängersegment oder Vorgängerframe in einer Tabelle festgehalten. Dies kann beispielsweise mit Hilfe eines Computerprogramms mit einem entsprechenden Programmcode elektronisch erfolgen. Jeder Delaysprung kann nun gemäß einigen Ausführungsbeispielen durch die Zahl der vorherigen Frames mit konstanten Delay- oder Versatzwert normalisiert werden. Aus dieser Tabelle wird in einem nächsten Schritt ein Histogramm mit der Häufigkeit jedes vorkommenden normalisierten Delaysprungs aufgebaut. Dabei können gemäß einiger Ausführungsbeispiele Delaysprünge oder Differenzversatzwerte mit einem Unterschied Null (am Ende einer Reihe von Delaysprüngen) oder extrem hohen Werten (Ausreißern) aus der Vielzahl bzw. der Verteilung der bestimmten Werte entfernt werden und bei der weiteren Auswertung nicht berücksichtigt werden. Mit Methoden der Histogrammanalyse kann das Histogramm von offensichtlichen, sehr groben Fehlern bereinigt werden. Mit Hilfe der Wahrscheinlichkeitsdichtefunktion (Probability Density Function (PDF)) kann aus dem Histogramm der am häufigste auftretende mittlere Delaysprung pro Abtastwert, die sog. Delay Difference per Sample, gewonnen werden. Falls dieser Wert eine ausreichende Häufigkeit aufweist, kann dieser Wert als zuverlässiges Maß für die Abweichung der Abtastrate bzw. Framerate, also des Abtastratenunterschiedes dienen.

Gemäß einiger Ausführungsbeispiele kann basierend auf dem Abtastratenunterschied auch das Abtastratenverhältnis des ersten Informationssignals IS1 zu dem zweiten Informationssignal IS2 bestimmt werden. Das Abtastratenverhältnis (sog. Sample Rate Ratio) kann mit folgender Formel beschrieben werden.

Sample Rate Ratio = 1,0 / (1,0 - Delay Difference per Sample).

Allgemein lässt sich das erfindungsgemäße Verfahren und die erfindungsgemäße Vorrichtung auf alle Signalpaare anwenden, für die sich ein Delay bzw. ein Versatzwert berechnen lässt. Obwohl einige der Fig. 1a bis 5b als Blockdiagramme für Ausführungsbeispiele der Vorrichtung zur Bestimmung eines Abtastratenunterschieds zwischen einem ersten Informationssignal und einem zweiten Informationssignal dargestellt sind, dienen diese Figuren gleichzeitig auch zur Veranschaulichung einiger Ausführungsbeispiele des Verfahrens zur Bestimmung eines Abtastratenunterschieds zwischen dem ersten Informationssignal und dem zweiten Informationssignal. Die Funktionalitäten der zu den Figuren beschriebenen Blöcke können entsprechend als Schritte des erfindungsgemäßen Verfahrens umgesetzt werden.

Insbesondere wird auch darauf hingewiesen, dass abhängig von den Gegebenheiten das Verfahren auch als Software oder Computerprogramm implementiert sein kann. Die Implementation kann beispielsweise auf einem digitalen Speichermedium, insbesondere einer Diskette, einer CD oder einer DVD mit elektronisch auslesbaren Steuersignalen erfolgen, die mit einem programmierbaren Computersystem zusammenwirken können, so dass das entsprechende Verfahren ausgeführt wird. Allgemein besteht die Erfindung somit auch in einem Computerprogrammprodukt mit auf einem maschinenauslesbaren trägergespeicherten Programmcode zur Durchführung des Verfahrens, wenn das Computerprogrammprodukt auf einem Rechner abläuft. In anderen Worten ausgedrückt, kann die Erfindung somit als Computerprogramm mit einem Programmcode zur Durchführung des Verfahrens realisiert werden, wenn das Computerprogrammprodukt auf einem Computer abläuft.

Eine typische Anwendung der vorliegenden Erfindung liegt z.B. in einem neuartigen Sprachqualitätsmessverfahren. Dieses Sprachqualitätsmessverfahren kann ähnlich wie das oben erwähnte PESQ durchgeführt werden, aber ein verbessertes "Temporal Alignment" aufweisen. Gemäß Ausführungsbeispielen der vorliegenden Erfindung kann das Verfahren zur Bestimmung eines Abtastratenunterschieds zwischen einem ersten Informationssignal IS1 und einem zweiten Informationssignal IS2 zunächst ein Temporal Alignment oder ein zeitliches Anpassen oder Ausrichten der Signale IS1, IS2 aufweisen. Aus den anschließend gemessenen Delays oder Versatzwerten wird ein Abtastratenunterschied gemessen oder bestimmt. Falls notwendig, also der gemessene Abtastratenunterschied größer ist als ein vorbestimmter Grenzwert, kann die Abtastrate mittels Abtastratenkonvertierung (Sample Rate Conversion) der Informationssignale zueinander angepasst werden und dann das Temporal Alignment erneut durchgeführt werden. Bei der Abtastratenkonvertierung kann eine Abtastrate eines digitalen Informationssignals von einer Abtastrate auf eine andere Abtastrate gewandelt werden, während die Information, die das Informationssignal beinhaltet, so wenig wie möglich geändert wird. Dieses Prinzip kann iterativ so lange wiederholt werden, bis die Abtastratenabweichung klein genug ist, also beispielsweise kleiner als ein vorbestimmter Grenzwert. Falls die Informationssignale in diesem zweiten zeitlich zueinander ausgerichteten Zustand mit reduzierten Abtastratenunterschied vorliegen, kann dann eine Qualitätsmessung, also beispielsweise eine Sprachqualitätsmessung durchgeführt werden. Dieses objektive Sprachqualitätsmessverfahren kann exaktere oder objektivere Sprachqualitätsmessergebnisse liefern, als herkömmliche Sprachqualitätsmessverfahren, da hier neben dem schon bekannten Temporal Alignment ein Abtastratenunterschied zwischen den zu untersuchenden Signalen reduziert werden kann.

Das erfindungsgemäße Verfahren und die erfindungsgemäße Vorrichtung zur Bestimmung eines Abtastratenunterschieds weisen dabei den Vorteil auf, dass sie auch für sehr kurze Signale und bei geringen Abweichungen der Abtast-/Frameraten noch zuverlässig funktionieren.

Eine weitere mögliche Anwendung besteht darin, die durch die abweichende Abtastrate eventuell ebenfalls abweichende Tonhöhe eines Audiosignals wieder zu korrigieren. Es kann also eine sog. Pitch-Correction durchgeführt werden.

Gemäß einem Ausführungsbeispiel der vorliegenden Erfindung kann die Qualitätsbestimmungseinrichtung 120 auch mit Hilfe einer Kreuzkorrelation einen Informationsqualitätsunterschied des in dem zweiten zeitlich ausgerichteten Zustand befindlichen ersten und zweiten Informationssignal bestimmen.

Handelt es sich bei den Informationssignalen beispielsweise um eine Videosequenz oder Videosignale, so kann ein Segment beispielsweise einem oder mehreren Bildern des Videosignals entsprechen. Handelt es sich bei dem ersten und zweiten Informationssignal IS1, IS2 um Audiosignale (z.B. Musik- oder Sprachsignale), so kann ein Segment beispielsweise eine bestimmte Anzahl von Samples bzw. Abtastwerte des digitalisierten Audiostroms aufweisen.

Die Ausführungsbeispiele, die im Vorhergehenden beschrieben wurden, gingen mehr oder weniger davon aus, dass der Abtastratenunterschied global bzw. konstant über beispielsweise das erste und/oder zweite Informationssignal hinweg ist. Diese Annahme muss aber nicht zwingend erfüllt sein. Abhängig von einem Übertragungsweg, auf dem eines der Informationssignale übertragen worden ist, kann es beispielsweise sein, dass der Abtastratenunterschied zu dem jeweils anderen Informationssignal, wie z. B. einem Referenzsignal, zeitlich schwankt. Die obigen Ausführungsbeispiele sind ohne Weiteres so erweiterbar, dass sie nicht nur einen konstanten bzw. globalen Abtastunterschied erfassen, sondern dass sie einen zeitlichen Verlauf des Abtastratenunterschiedes erfassen. Eine Möglichkeit besteht beispielsweise darin, dass die im Vorhergehenden beschriebenen Ausführungsbeispiele lokal auf vorbestimmte zeitliche Abschnitte des ersten bzw. zweiten Informationssignals angewendet werden, um für jeden dieser vorbestimmten zeitlichen Abschnitte unter der Annahme, dass in denselben der Abtastratenunterschied wieder konstant ist, den Abtastratenunterschied individuell zu bestimmen. Die vorbestimmten zeitlichen Abschnitte können durch eine gleichmäßige zeitliche Unterteilung oder durch ein anderes Kriterium gegeben sein, und sie können sich überlappen, nicht-überlappen, aneinander angrenzen oder sogar voneinander beabstandet sein. Ein konkretes Beispiel wird im nächsten Absatz beschrieben. Möglich wäre aber auch, das Erfassen einer kontinuierlichen Veränderung des Abtastratenunterschieds durch Fitten einer entsprechenden Abtastratenunterschiedfunktion über die Zeit in die zeitliche Folge von Versatzwerten, die für die Mehrzahl von Segmenten des ersten Informationssignals bestimmt worden sind, wie z.B. eines Polynoms höherer Ordnung anstelle einer Regressionsgeraden 77.

Ein Beispiel für die Bestimmung des Abtastratenunterschiedes unter Berücksichtigung, dass derselbe zeitlich variieren kann, besteht darin, in dem ersten Informationssignal, wie z. B. einem Telefonsprachsignal, Pausen zu erfassen, d.h. zeitliche Abschnitte, in denen die Teilnehmer nicht sprechen, die eine bestimmte Zeitdauer überschreiten und über die hinweg der Signalpegel eine bestimmte Schwelle nicht überschreitet. Verschiedenste Möglichkeiten bestehen dafür, Pausen zu detektieren. Die verbleibenden, durch die detektierten Pausen voneinander getrennten zeitlichen Abschnitte können dann individuell, jeder für sich oben genannten Ausführungsbeispielen für die Bestimmung des Abtastratenunterschieds zugeführt werden, um für jeden Sprachabschnitt einen Abtastratenunterschied zu bestimmen, Oder es wird erst in einer Vorab-Analyse festgestellt, ob sich die in den einzelnen Segmenten festgestellten Versatzwerte in den verschiedenen zeitlichen Sprachabschnitten unterschiedlich verhalten, wobei nur in letztgenanntem Fall die zeitlichen Sprachabschnitte getrennt behandelt werden. Natürlich lässt sich die soeben beschriebene Vorgehensweise auch auf andere Signale als Sprachsignale übertragen. Die Definition für die Pausen kann auch anders getroffen werden als im Vorhergehenden erwähnt.

In noch einmal anderen Worten ausgedrückt lassen sich oben genannte Ausführungsbeispiele auf verschiedene Arten so erweitern, dass eine Erfassung eines zeitlich variierenden Abtastratenunterschieds möglich ist. Gemäß einer Variation wird zunächst durch Analyse der einzelnen Versatzwerte an den einzelnen Segmenten festgestellt, ob sich diese in vorbestimmten verschiedenen Signalabschnitten unterschiedlich verhalten, wobei je nachdem die Abschnitte getrennt behandelt werden oder nicht. Gemäß einer weiteren Variation werden zeitliche Abschnitte dadurch bestimmt, dass sie Sprache enthalten, wohingegen Pausen, die dieselben trennen, ignoriert werden. Die Pausen können auf irgendeine Art und Weise erkannt werden. Die durch die Pausen getrennten zeitlichen Abschnitte werden dann individuell den oben genannten Ausführungsbeispielen für die Abtastratenunterschiedbestimmung zugeführt.

## Patentansprüche

1. Vorrichtung (10) zur Bestimmung eines Abtastratenunterschiedes zwischen einem ersten Informationssignal (IS1) und einem zweiten Informationssignal (IS2), mit:
einer Versatzbestimmungseinrichtung (20) zum, für jedes einer Mehrzahl von Segmenten (S1(i)) des ersten Informationssignals (IS1), Bestimmen von zugeordneten Versatzwerten (VW(i)), die die Mehrzahl von Segmenten (S1(i)) zu dem zweiten Informationssignal (IS2) zeitlich ausrichten;
**gekennzeichnet durch** eine Einrichtung (40) zur Berechnung des Abtastratenunterschiedes auf Basis der Versatzwerte (VW(i)),
wobei die Einrichtung (40) zur Berechnung des Abtastratenunterschiedes
ausgebildet ist, eine Regressionsanalyse mittels der Versatzwerte (VW(i)) durchzuführen und den Abtastratenunterschied aus einer Geradensteigung zu bestimmen, oder
ausgebildet ist, einen Median oder Mittelwert von Differenzen zwischen Versatzwerten (DVW(i)) zu bestimmen, der dem Abtastratenunterschied entspricht, oder
ausgebildet ist, um aus einem Histogramm von Differenzen (DVW(i)) zwischen Versatzwerten (DVW(i)) einen am häufigst auftretenden Delaysprung pro Abtastwert als ein Maß für den Abtastratenunterschied zu bestimmen.

2. Vorrichtung gemäß Anspruch 1, wobei die Einrichtung (40) zur Berechnung des Abtastratenunterschiedes ausgebildet ist, durch statistische Auswertung einer Verteilung, die von den Versatzwerten (VW(i)) abhängt, den Abtastratenunterschied zu berechnen.

3. Vorrichtung gemäß Anspruch 2, wobei die Einrichtung (40) zur Berechnung des Abtastratenunterschiedes ausgebildet ist, die statistische Auswertung der Verteilung so durchzuführen, dass Ausreißer in der Verteilung entfernt werden.

4. Vorrichtung gemäß einem der Ansprüche 1 bis 3, bei der die Einrichtung zur Berechnung des Abtastratenunterschiedes ausgebildet ist, Differenzen zwischen Versatzwerten (VW(i)), die unterschiedlichen Segmenten (S1(i)) des ersten Informationssignals (IS1) zugeordnet sind, zu bestimmen, um Differenzversatzwerte (DVW(i)) zu erhalten, wobei die Einrichtung (40) zur Berechnung des Abtastratenunterschiedes ausgebildet ist, die Berechnung des Abtastratenunterschieds auf Basis der Differenzversatzwerte (DVW(i)) durchzuführen.

5. Vorrichtung gemäß Anspruch 4, wobei die Einrichtung (40) zur Berechnung des Abtastratenunterschiedes ausgebildet ist, einer Folge von N (N ≥ 2) aufeinanderfolgenden identischen Versatzwerten (VW(i)), eine Folge von N aufeinanderfolgende identische normalisierte Differenzversatzwerte (NDVW(i)) zuzuweisen, die dem Quotienten aus dem Differenzversatzwert bezüglich des N+1-ten Versatzwertes (VW(N+1)) und dem N-ten Versatzwert (VW(N)), geteilt durch die Anzahl N entspricht, also ((VW(N+1)-VW(N)/N).

6. Vorrichtung gemäß einem der Ansprüche 1 bis 5, wobei das erste und das zweite Informationssignal Audiosignale, oder das erste und das zweite Informationssignal Videosignale sind.

7. Vorrichtung gemäß einem der Ansprüche 1 bis 6, wobei ein Segment des ersten Informationssignals (IS1) eine Anzahl A1 ≤ 256 aufeinanderfolgender Abtastzeitpunkte des ersten Informationssignals (IS1) aufweist, falls das erste Informationssignal ein Audiosignal ist oder eine Anzahl A2 ≤ 50 aufeinanderfolgender Abtastzeitpunkte des ersten Informationssignals (IS1) aufweist, falls das erste Informationssignal ein Videosignal ist.

8. Vorrichtung zur Bestimmung eines Abtastratenunterschiedes zwischen einem ersten Informationssignal (IS1) und einem zweiten Informationssignal (IS2), gemäß einem der Ansprüche 1 bis 7, und einer Abtastratenänderungseinrichtung (80), die ausgebildet ist, eine Reduktion einer Abweichung der Abtastraten des ersten und zweiten Informationssignals vorzunehmen, falls der Abtastratenunterschied größer ist, als ein vorbestimmter Grenzwert.

9. Vorrichtung gemäß Anspruch 8, die ferner eine Einrichtung (100) zur zeitlichen Ausrichtung des ersten Informationssignals (IS1) und des zweiten Informationssignals (IS2) zueinander aufweist, und zwar nach Reduktion der Abweichung des Abtastratenunterschieds des ersten (IS1) und zweiten (IS2) Informationssignals, um einen zweiten zueinander zeitlich ausgerichteten Zustand zu erzeugen.

10. Vorrichtung gemäß Anspruch 9, die ferner eine Qualitätsbestimmungseinrichtung (120) aufweist, die ausgebildet ist, einen Informationsqualitätsunterschied zwischen dem ersten Informationssignal und dem zweiten Informationssignal, in dem zweiten zueinander zeitlich ausgerichteten Zustand zu bestimmen.

11. Vorrichtung gemäß einem der Ansprüche 8 bis 10, wobei die Abtastratenänderungseinrichtung (80) ausgebildet ist, die Bestimmung des Abtastratenunterschieds und die Reduktion der Abweichung iterativ durchzuführen, bis ein Abbruchskriterium erfüllt ist.

12. Verfahren zur Bestimmung eines Abtastratenunterschiedes zwischen einem ersten Informationssignal und einem zweiten Informationssignal, mit folgenden Schritten:
Bestimmen (200) von zugeordneten Versatzwerten für jedes einer Mehrzahl von Segmenten des ersten Informationssignals, die die Mehrzahl von Segmenten zu dem zweiten Informationssignal zeitlich ausrichten; und
**gekennzeichnet durch** die Berechnung (210) des Abtastratenunterschiedes auf Basis der Versatzwerte,
wobei die Berechnung des Abtastratenunterschiedes Abtastratenunterschiedes
das Durchführen einer Regressionsanalyse mittels der Versatzwerte (VW(i)) und eine Bestimmung des Abtastratenunterschieds aus einer Geradensteigung, oder
eine Bestimmung eines Median oder Mittelwerts von Differenzen zwischen Versatzwerten (DVW(i)), der dem Abtastratenunterschied entspricht, oder
eine Bestimmung eines am häufigst auftretenden Delaysprungs pro Abtastwert aus einem Histogramm von Differenzen (DVW(i)) zwischen Versatzwerten (DVW(i)) als ein Maß für den Abtastratenunterschied aufweist.

13. Computerprogramm, umfassend Befehle, die bei der Ausführung des Programms durch einen Computer diesen veranlassen, das Verfahren nach Anspruch 12 auszuführen.

## Claims

1. A device (10) for determining a sample rate difference between a first information signal (IS1) and a second information signal (IS2), comprising:
an offset determination means (20) to determine, for each of a plurality of segments (S1(i)) of the first information signal (IS1), associated offset values (VW(i)) which temporally align the plurality of segments (S1(i)) to the second information signal (IS2);
**characterized by**
means (40) for calculating the sample rate difference on the basis of the offset values (VW(i)),
wherein the means (40) for calculating the sample rate difference
is implemented to execute a regression analysis by means of the offset values (VW(i)) and to determine the sample rate difference from the slope of a straight line, or
is implemented to determine a median or average value of differences between offset values (DVW(i)) that corresponds to the sample rate difference, or
is implemented to determine, from a histogram of differences (DVW(i)) between offset values (DVW(i)), a most frequently occurring delay difference per sample as a measure for the sample rate difference.

2. The device according to claim 1, wherein the means (40) for calculating the sample rate difference is implemented to calculate the sample rate difference by statistical evaluation of a distribution which depends on the offset values (VW(i)).

3. The device according to claim 2, wherein the means (40) for calculating the sample rate difference is implemented to execute the statistical evaluation of the distribution so that outliers in the distribution are removed.

4. The device according to one of claims 1 to 3, wherein the means for calculating the sample rate difference is implemented to determine differences between offset values (VW(i)) associated with different segments (S1(i)) of the first information signal (IS1) in order to obtain differential offset values (DVW(i)), wherein the means (40) for calculating the sample rate difference is implemented to execute the calculation of the sample rate difference on the basis of the differential offset values (DVW(i)).

5. The device according to claim 4, wherein the means (40) for calculating the sample rate difference is implemented to allocate to a sequence of N (N ≥ 2) subsequent identical offset values (VW(i)) a sequence of N subsequent identical normalized differential offset values (NDVW(i)) which corresponds to the quotient of the differential offset value with respect to the N+1-th offset value (VW(N+1)) and the N-th offset value (VW(N)), divided by the number N, i.e. ((VW(N+1)-WV(N)/N).

6. The device according to one of claims 1 to 5, wherein the first and the second information signals are audio signals or the first and the second information signals are video signals.

7. The device according to one of claims 1 to 6, wherein one segment of the first information signal (IS1) comprises a number A1 ≤ 256 of subsequent sample times of the first information signal (IS1) if the first information signal is an audio signal, or a number A2 ≤ 50 of subsequent sample times of the first information signal (IS1) if the first information signal is a video signal.

8. The device for determining a sample rate difference between a first information signal (IS1) and a second information signal (IS2) according to one of claims 1 to 7, and a sample rate changing means (80) which is implemented to execute a reduction of a deviation of the sample rates of the first and second information signals if the sample rate difference is greater than a predetermined threshold value.

9. The device according to claim 8, further comprising a means (100) for temporal alignment of the first information signal (IS1) and the second information signal (IS2) with respect to each other, that is after a reduction of the deviation of the sample rate difference of the first (IS1) and the second (IS2) information signal in order to generate a second state that is temporally aligned with respect to each other.

10. The device according to claim 9, further comprising a quality determination means (120) which is implemented to determine an information quality difference between the first information signal and the second information signal in the second state that is temporally aligned with respect to each other.

11. The device according to one of claims 8 to 10, wherein the sample rate changing means (80) is implemented to execute the determination of the sample rate difference and the reduction of the deviation iteratively until a termination criterion is fulfilled.

12. A method of determining a sample rate difference between a first information signal and a second information signal, comprising:
determining (200) associated offset values for each of a plurality of segments of the first information signal which temporally align the plurality of segments with respect to the second information signal; and
**characterized by**
calculating (210) the sample rate difference on the basis of the offset values,
the calculation of the sample rate difference comprising:
executing a regression analysis by means of the offset values (VW(i)) and determining the sample rate difference from the slope of a straight line, or
determining a median or average value of differences between offset values (DVW(i)) that corresponds to the sample rate difference, or
determining a most frequently occurring delay difference per sample from a histogram of differences (DVW(i)) between offset values (DVW(i)) as a measure for the sample rate difference.

13. A computer program including instructions that, when the program is executed by a computer, cause the same to execute the method according to claim 12.

## Revendications

1. Dispositif (10) pour déterminer une différence de fréquence d'échantillonnage entre un premier signal d'information (IS1) et un deuxième signal d'information (IS2), avec:
un moyen de détermination de décalage (20) destiné à déterminer, pour chacun d'une pluralité de segments (S1(i)) du premier signal d'information (IS1), les valeurs de décalage associées (VW(i)) qui alignent dans le temps la pluralité de segments (S1(i)) sur le deuxième signal d'information (IS2);
**caractérisé par** un moyen (40) destiné à calculer la différence de fréquence d'échantillonnage sur base des valeurs de décalage (VW(i)),
dans lequel le moyen (40) destiné à calculer la différence de fréquence d'échantillonnage
est conçu pour effectuer une analyse de régression au moyen des valeurs de décalage (VW(i)) et pour déterminer la différence de fréquence d'échantillonnage à partir d'une pente de ligne droite, ou
est conçu pour déterminer une médiane ou valeur moyenne des différences entre les valeurs de décalage (DVW(i)) qui correspond à la différence de fréquence d'échantillonnage, ou
est conçu pour déterminer, à partir d'un histogramme de différences (DVW(i)) entre les valeurs de décalage (DVW(i)), un saut de retard par échantillon se produisant le plus souvent comme mesure de la différence de fréquence d'échantillonnage.

2. Dispositif selon la revendication 1, dans lequel le moyen (40) destiné à calculer la différence de fréquence d'échantillonnage est conçu pour calculer, par évaluation statistique d'une distribution qui dépend des valeurs de décalage (VW(i)), la différence de fréquence d'échantillonnage.

3. Dispositif selon la revendication 2, dans lequel le moyen (40) destiné à calculer la différence de fréquence d'échantillonnage est conçu pour effectuer l'évaluation statistique de la distribution de sorte que soient éliminées les valeurs aberrantes dans la distribution.

4. Dispositif selon l'une des revendications 1 à 3, dans lequel le moyen de calcul de la différence de fréquence d'échantillonnage est conçu pour déterminer les différences entre les valeurs de décalage (VW(i)) qui sont associées à différents segments (S1(i)) du premier signal d'information (IS1), pour obtenir les valeurs de décalage de différence (DVW(i)), dans lequel le moyen (40) de calcul de différence de fréquence d'échantillonnage est conçu pour effectuer le calcul de la différence de fréquence d'échantillonnage sur base des valeurs de décalage de différence (DVW(i)).

5. Dispositif selon la revendication 4, dans lequel le dispositif (40) de calcul de la différence de fréquence d'échantillonnage est conçu pour associer, à une séquence de N (N ≥ 2) de valeurs de décalage (VW(i)) identiques successives, une séquence de N valeurs de décalage de différence normalisées (NDVW(i)) identiques successives qui correspond au quotient de la valeur de décalage de différence par rapport à la N+1-ème valeur de décalage (VW(N+1)) et à la N-ème valeur de décalage (VW(N)) divisé par le nombre N, donc ((VW(N+1) - VW(N)/N).

6. Dispositif selon l'une des revendications 1 à 5, dans lequel le premier et le deuxième signal d'information sont des signaux audio, ou le premier et le deuxième signal d'information sont des signaux vidéo.

7. Dispositif selon l'une quelconque des revendications 1 à 6, dans lequel un segment du premier signal d'information (IS1) présente un nombre A1 ≤ 256 de moments d'échantillonnage successifs du premier signal d'information (IS1) si le premier signal d'information est un signal audio ou un nombre A2 ≤ 50 de moments d'échantillonnage successifs du premier signal d'information (IS1) si le premier signal d'information est un signal vidéo.

8. Dispositif pour déterminer une différence de fréquence d'échantillonnage entre un premier signal d'information (IS1) et un deuxième signal d'information (IS2) selon l'une des revendications 1 à 7, et un moyen de changement de fréquence d'échantillonnage (80) qui est conçu pour procéder à une réduction d'un écart entre les fréquences d'échantillonnage du premier et du deuxième signal d'information si la différence de fréquence d'échantillonnage est supérieure à une valeur limite prédéterminée.

9. Dispositif selon la revendication 8, présentant par ailleurs un moyen (100) destiné à aligner dans le temps le premier signal d'information (IS1) et le deuxième signal d'information (IS2), et ce après réduction de l'écart de la différence de fréquence d'échantillonnage du premier (IS1) et du deuxième (IS2) signal d'information, pour générer un deuxième état aligné l'un sur l'autre dans le temps.

10. Dispositif selon la revendication 9, présentant par ailleurs un moyen (120) de détermination de qualité qui est conçu pour déterminer une différence de qualité d'information entre le premier signal d'information et le deuxième signal d'information dans le deuxième état aligné l'un sur l'autre dans le temps.

11. Dispositif selon l'une des revendications 8 à 10, dans lequel le moyen de changement de fréquence d'échantillonnage (80) est conçu pour effectuer de manière itérative la détermination de la différence de fréquence d'échantillonnage et la réduction de l'écart jusqu'à ce que soit rempli un critère d'interruption.

12. Procédé pour déterminer une différence de fréquence d'échantillonnage entre un premier signal d'information et un deuxième signal d'information, aux étapes suivantes consistant à:
déterminer (200) les valeurs de décalage associées pour chacun d'une pluralité de segments du premier signal d'information qui alignent dans le temps la pluralité de segments sur le deuxième signal d'information; et
**caractérisé par** le fait de calculer (210) la différence de fréquence d'échantillonnage sur base des valeurs de décalage,
dans lequel le calcul de la différence de fréquence d'échantillonnage présente le fait de
effectuer une analyse de régression à l'aide des valeurs de décalage (VW(i)) et déterminer la différence de fréquence d'échantillonnage à partir d'une pente de ligne droite, ou
déterminer une médiane ou valeur moyenne des différences entre les valeurs de décalage (DVW(i)) qui correspond à la différence de fréquence d'échantillonnage, ou
déterminer un saut de retard par valeur d'échantillonnage se produisant le plus souvent à partir d'un histogramme de différences (DVW(i)) entre les valeurs de décalage (DVW(i)) comme mesure de la différence de fréquence d'échantillonnage.

13. Programme d'ordinateur comportant des instructions qui, lors de l'exécution du programme par un ordinateur, font que soit réalisé le procédé selon la revendication 12.
